# EUROPEAN PATENT SPECIFICATION

(11) **EP 0 790 148 B1**
(45) Date of publication and mention of the grant of the patent: **20.10.1999**
(21) Application number: 97102416.1
(22) Date of filing: 14.02.1997
(51) Int. Cl.: B60Q 1/076

(54) **Corrector device for the trim of a headlight especially for automobiles, actuated by a piezoelectric motor**
Vorrichtung zum Einstellen von Scheinwerfern mit piezoelektrischem Motor
Dispositif de réglage des phares utilisant un moteur piézoélectrique

(30) Priority: 16.02.1996 IT TO960105
(43) Date of publication of application: 20.08.1997
(73) Proprietor: MAGNETI MARELLI S.p.A., 20145 Milano (IT)
(72) Inventor: Monk, John Frederick, 10078 Venaria Reale (IT); Groppo, Francesco, 10138 Torino (IT)
(74) Representative: Plebani, Rinaldo

(56) References cited:
- EP-A- 0 442 469
- EP-A- 0 702 419
- US-A- 5 237 166

## Description

The present invention relates to a corrector device for the trim of a headlight especially of an automobile, actuated by a rotating piezoelectric motor.

The use of point-like light sources of high electro-optical efficiency, currently used for automobile headlamps, generates very narrow light beams which illuminate regions which are very well defined in the direction of travel of the vehicle; consequently, following changes in the trim of the vehicle, whether static on account of the load carried, or dynamic during an abrupt variation in speed, the field illuminated by the lamps shifts with respect to the correct position for safe driving; it is therefore necessary to use devices which are able to correct the trim of the headlamps so as to maintain the illuminated field in the proper correct position; especially in the case of headlights provided with a moveable reflector, correction of the orientation of the light beam is carried out by means of a corrector device actuated by an electric motor and acting on the position of the reflector.

Corrector devices for the trim of the headlamps of automobiles are known in the state of the art which comprise a rotating electric motor acting through a rotary-to-linear motion convertor on a control arm connected to the reflector of the headlamp; the motor used is in general a DC motor, or a stepper motor, whose size in relation to the power required does not always enable the complete device of the motor to be inserted into the body of the headlight.

The fact of having to fit the motor outside the headlight and of encroaching into the latter with the control arm, through an aperture in a wall of the headlight, involves various drawbacks such as not-insubstantial bulk of the motor, with corresponding problems of fitment and subsequent maintenance; the presence of an aperture, albeit protected, in the body of the headlight gives rise to dust and contaminants being drawn into the headlight and soiling the reflecting surface of the reflector, reducing its efficiency.

The object of the present invention is therefore to produce a corrector device for the trim of a headlight especially for automobiles, which is of small size and is able to be fitted rapidly into the body of the headlight.

Another object of the invention is to employ a motor to actuate the corrector device, of restricted size, of low inertia, accurate and fast, able to supply a dynamic correction while the vehicle is travelling and a static correction at the start of the journey.

In accordance with the invention, there is presented a corrector device for the trim of a headlight, especially for automobiles, comprising an electric motor endowed with rotary motion, a conversion device connected to the said motor and able to convert the said rotary motion into a linear motion, and an output member connected to the said conversion device and able to transmit the said linear motion to a reflector of the said headlight, characterized in that the said motor is a piezoelectric motor.

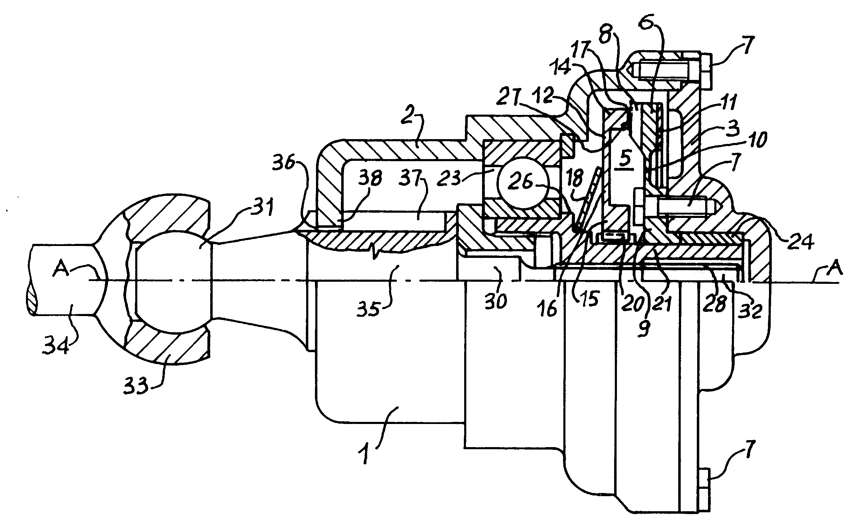

This and other characteristics of the invention will emerge more clearly from the following description of a preferred embodiment given by way of example, but without limitation, with reference to the attached drawing representing a partly cutaway elevational view of the device according to the invention.

With reference to the figure, 1 indicates overall the corrector device for the trim of a headlight, not represented; for simplicity, the device 1 is cut away in the part above the axis of longitudinal symmetry A-A, the lower part being symmetrically identical.

The device 1 is contained in a metal container 2, for example an aluminium alloy closed by a cover 3 screwed thereon.

The device 1 is actuated by a miniaturized electric motor, although of suitable power, contained in the container 2, so that the device 1 can be easily inserted into the body of the headlight, even if the latter is of small size.

According to the invention, the motor used is a piezoelectric-type motor 5 endowed with rotary motion, known per se, which will be described in relation to its mechanical structure without however going deeply into the principle of operation. The appropriate control of the motor 5 can be exercised by the driver or by an electronic facility which derives a control signal dependent on specified parameters, for example on the trim of the vehicle.

The piezoelectric motor 5 comprises a stator 6 shaped as a circular disc and fixed with respect to the container 2 and to the cover 3; the stator 6 consists of a peripheral rim 8 connected to a central hub 9 by means of an intermediate strip 10 of lesser thickness; the hub 9 is fixed to the cover 3 by screws 7.

To one face of the rim 8 pointing towards the cover 3 is stuck an annular disc 11 of piezoelectric material which, as is known, when subjected to a polarized voltage, undergoes mechanical deformation which develops preferentially along a predefined axis; in this instance the piezoelectric ring 11 is suitably supplied with a voltage pulsating at a preset frequency and this causes localized deformation of the piezoelectric material which is transmitted to the rim 8 in the form of a periodic flexional deformation which propagates in the circumferential direction.

This flexional deformation is transferred by friction to a rotor 12 consisting of a peripheral annular rim 14 connected to a hub 15 by means of an intermediate circular, plane wall 16; the rim 14 is held pressed against an external face 17 of the stator 6 by a cup spring 18; the hub 15 is connected by a grooved coupling 20 to a nut 21 which can revolve on two bearings 23 and 24 mounted respectively on the container 2 and on the cover 3; the bearings 23 and 24 may both run slidably (self-lubricating bushes), or the bearing 23 may be a rolling bearing as represented in the figure.

The cup spring 18 is mounted against a circular shoulder 26 of the nut 21 and presses the rotor 12 against the stator 6 in such a way that the tangential frictional forces induced by the flexional deformations of the stator entrain the rotation of the rotor 12 and the nut 21 therewith.

The surface 17 of the rotor 12 is coated with a layer 27 of material with a high coefficient of friction in order to improve the transmission of the rotary movement between stator and rotor.

The nut 21 engages with a screw 28 belonging to an output member 30 consisting of a spherical head 31 on one side and a cylindrical shank 32 threaded with the screw 28 on the other side; the spherical head 31 is intended to be coupled with a corresponding spherical seat 33 of an arm 34 connected to a moveable reflector, not represented; the output member 30 furthermore comprises a cylindrical intermediate portion 35 axially abutting against the bearing 23, adjacent to the spherical head 31 and sliding in an exit hole 36 of the container 2; the portion 35 is engineered with an axial groove 37 which engages with a catch 38 projecting inside the hole 36 in order to permit axial movements only and not rotary movements to the output member 30.

The screw 28 is constructed with its thread inclined in such a way as to render reversible the motion between the nut 21 and the said screw 28. The irreversibility of the transmission system between motor 5 and head 31 is guaranteed by the particular choice of a piezoelectric motor; in fact, in the system described, the free rotation of the nut 21 in consequence of an axial load induced on the screw 28 is prevented by the resistive frictional torque acting on the rotor 12 and induced thereon by the axial force applied by the spring 18.

The grooved coupling 20 is of the axially sliding type, i.e. such as to transmit only the torque, but not axial forces between rotor 12 and nut 21. When fitting the spherical head 31 into the seat 33 of the reflector (which is normally a snap-fit, the head 31 being thrust axially into the seat 33), the axial load applied to the spherical head 31 is offloaded, through the portion 35 and the bearing 23, onto the container 2. The rotor 12 and the stator 8 of the motor 5 therefore do not experience the fitting load of the head 31 which, to allow the head 31 to negotiate the mouth of the seat 33 with an elastic deformation, may attain or exceed 300 N.

The employing according to the invention of a piezoelectric motor as well as a common electric motor, thus makes it possible on the one hand to produce an overall structure such as to support the axial fitting loads without damaging the motor and, on the other hand nevertheless to have minimal axial bulk; furthermore, the actual dimensions of the motor 5 can be contained within 40 mm in diameter and 20 mm in axial thickness, making it possible to construct a corrector device for the orientation of the reflector of restricted size, able to be inserted into the body of the headlight.

Finally, the piezoelectric motor is, by construction, very lightweight and hence offers low inertia to rotation, so that it develops fast and accurate movements for precise and timely control of the orientation of the light beam of the headlamps of the vehicle.

## Claims

1. Corrector device for the trim of a headlight, especially for automobiles, comprising an electric motor (5), endowed with rotary motion, a conversion device (21, 28) connected to the said motor and able to convert the said rotary motion into a linear motion, and an output member (30) connected to the said conversion device and able to transmit the said linear motion to a reflector of the said headlight, characterized in that the said motor is a piezoelectric motor.

2. Corrector device according to Claim 1, characterized in that the said motor comprises a stator (6) shaped as a circular disc, integral with a support structure (3) of the said motor, a circular ring (11) of piezoelectric material fixed on a lateral surface of the said stator and able to be excited by a pulsed electric voltage, a rotor (12) shaped as a circular disc, coupled with the said convertor device (21, 28) and facing the said stator (6) on the opposite side with respect to the said piezoelectric ring (11) and an elastic compression element (18) able to press the said rotor (12) against the said stator (6) over a peripheral circular region (17) of the said stator in the vicinity of the said piezoelectric ring.

3. Device according to Claim 2 characterized in that the said convertor device comprises a revolvable nut (21) coupled with a screw (28) endowed with axial motion, the said nut being connected with the said rotor (12) via an axially slidable grooved coupling (20) and the said screw (28) belonging to the said output member (30).

4. Device according to Claim 3, characterized in that the said screw (28) is constructed with its thread inclined in such a way as to render reversible the motion between the nut (21) and the screw (28), the irreversibility of the system being guaranteed by the resistive frictional torque acting on the said rotor (12) in consequence of the axial force applied thereto by the said elastic element (18).

## Patentansprüche

1. Korrekturvorrichtung für die Einstellung der Richtung eines Scheinwerfers, insbesondere für Kraftfahrzeuge, mit einem Elektromotor (5), der eine Drehbewegung ausführt, einer Umsetzungsvorrichtung (21, 28) die mit dem Motor verbunden ist und die Drehbewegung in eine geradlinige Bewegung umsetzen kann, und einem Ausgangselement (30) das mit der Umsetzungsvorrichtung verbunden ist und die geradlinige Bewegung an einen Reflektor des Scheinwerfers übertragen kann, dadurch gekennzeichnet daß der Motor ein piezoelektrischer Motor ist.

2. Korrekturvorrichtung nach Anspruch 1, dadurch gekennzeichnet, daß der Motor einen Stator (6) in Form einer kreisförmigen Scheibe, die mit einer Tragstruktur (3) des Motors einteilig ausgebildet ist, einen kreisförmigen Ring (11) aus piezoelektrischem Material, der an einer Seitenfläche des Stators befestigt ist und durch eine gepulste elektrische Spannung erregt werden kann, einen Rotor (12) in Form einer kreisförmigen Scheibe, der mit der Umsetzungsvorrichtung (21, 28) gekoppelt ist und dem Stator (6) auf der dem piezoelektrischen Ring (11) gegenüberliegenden Seite zugewandt ist, sowie ein elastisches Kompressionselement (18), das den Rotor (12) gegen den Stator (6) im gesamten kreisförmigen Umfangsbereich (17) des Stators in der Nähe des piezoelektrischen Rings pressen kann, umfaßt.

3. Vorrichtung nach Anspruch 2, dadurch gekennzeichnet, daß die Umsetzungsvorrichtung eine drehbare Mutter (21) enthält, die mit einer eine axiale Bewegung ausführenden Schraube (28) gekoppelt ist, wobei die Mutter mit dem Rotor (12) über eine axial gleitfähige Nutkupplung (20) verbunden ist und die Schraube (28) zum Ausgangselement (30) gehört.

4. Vorrichtung nach Anspruch 3, dadurch gekennzeichnet, daß die Schraube (28) so konstruiert ist, daß ihr Gewinde in der Weise geneigt ist, daß die Bewegung zwischen der Mutter (21) und der Schraube (28) umkehrbar ist, wobei die Unumkehrbarkeit des Systems durch das entgegenwirkende Reibdrehmoment gewährleistet ist, das auf den Rotor (12) infolge der durch das elastische Element (18) darauf ausgeübten axialen Kraft wirkt.

## Revendications

1. Un dispositif correcteur pour effectuer le réglage d'un phare, en particulier, pour automobile, comportant un moteur électrique (5) effectuant un mouvement de rotation, un dispositif de conversion (21, 28) raccordé audit moteur et capable de convertir ledit mouvement de rotation en un mouvement linéaire et un organe de sortie (30) raccordé audit dispositif de conversion et capable de transmettre ledit mouvement linéaire à un réflecteur dudit phare, caractérisé en ce que ledit moteur est un moteur piézo-électrique.

2. Dispositif correcteur selon la revendication 1, caractérisé en ce que ledit moteur comprend un stator (6) ayant la forme d'un disque circulaire, solidaire d'une structure support (3) dudit moteur, un anneau circulaire (11) en une matière piézo-électrique fixé sur une surface latérale dudit stator et susceptible d'être excité par une tension électrique pulsée, un rotor (12) ayant la forme d'un disque circulaire, accouplé audit dispositif convertisseur (21, 28) et faisant face audit stator (6) du côté opposé par rapport audit anneau piézo-électrique (11) et un élément de compression élastique (18) susceptible de presser ledit rotor (12) contre ledit stator (6) dans une région circulaire périphérique (17) dudit stator au voisinage dudit anneau piézo-électrique.

3. Dispositif selon la revendication 2, caractérisé en ce que ledit dispositif convertisseur comprend un écrou rotatif (21) vissé sur une vis (28) susceptible de se déplacer axialement, ledit écrou étant raccordé audit rotor (12) par l'intermédiaire d'un accouplement à rainure (20) et ladite vis (28) faisant partie dudit organe de sortie (30).

4. Dispositif selon la revendication 3, caractérisé en ce que ladite vis (28) est construite avec son filetage incliné d'une manière telle que le mouvement entre l'écrou (21) et la vis (28) est rendu réversible, l'irréversibilité du système étant garantie par le couple de friction résistant qui agit sur ledit rotor (12) et lui est appliqué par ledit élément élastique (18).
